Europäisches Patentamt

**European Patent Office**

**Office européen des brevets**

(19)

(11) Veröffentlichungsnummer: **0 117 388**
**B1**

(12) **EUROPÄISCHE PATENTSCHRIFT**

(45) Veröffentlichungstag der Patentschrift:
**11.03.87**

(51) Int. Cl.⁴: **F 16 L 59/02**

(21) Anmeldenummer: **83890237.7**

(22) Anmeldetag: **29.12.83**

(54) Isolierung für Speicher.

(30) Priorität: **27.01.83 AT 273/83**

(43) Veröffentlichungstag der Anmeldung:
**05.09.84 Patentblatt 84/36**

(45) Bekanntmachung des Hinweises auf die Patenterteilung:
**11.03.87 Patentblatt 87/11**

(84) Benannte Vertragsstaaten:
**BE CH DE FR GB IT LI LU NL SE**

(56) Entgegenhaltungen:
**DE - A - 2 340 708**
**DE - A - 2 349 601**
**DE - C - 835 240**
**DE - U - 1 873 419**
**DE - U - 1 936 299**
**DE - U - 6 803 388**

(73) Patentinhaber: **GREINER K.G., Greinerstrasse 70,**
**A-4550 Kremsmünster Oberösterreich (AT)**

(72) Erfinder: **Weingartner, Rudolf, Grundstrasse 22,**
**A-4501 Neuhofen/Kr. (AT)**

(74) Vertreter: **Krause, Ernst, Dipl.-Ing. et al, Dipl.- Ing.**
**Krause, Ernst Dipl. Ing. Casati, Wilhelm Patentanwälte**
**Amerlingstrasse 8, A-1061 Wien (AT)**

# Beschreibung

Die Erfindung bezieht sich auf eine Isolierung für Speicher, insbesondere für Grossspeicher, bei welcher vorgeformte Isolierkörper um den Speicher an diesem anliegend herumgelegt und miteinander verbunden sind.

Bei bekannten Ausbildungen dieser Art sind nach eigenen älteren Vorschlägen die Isolierkörper der Aussenform des Speichers genau angepasst, was den Nachteil hat, dass für jede Speicherform und jede Speichergrösse gesonderte Isolierkörper angefertigt und auf Lager gehalten werden müssen.

Die Verbindung der Isolierkörper erfolgt dabei durch Bindeschnüre, Bänder mit Schnallenverschluss oder PVC-Leisten mit formschlüssig ineinander greifenden Profilen.

Der Erfindung liegt die Aufgabe zugrunde, eine Isolierung der eingangs genannten Art zu schaffen, welche an Speichern mit unterschiedlichen Durchmessern angebracht werden kann, wobei auch bei im Freien aufgestellten Behältern eine entsprechend gute Isolierwirkung erzielt werden soll.

Erfindungsgemäss wird diese Aufgabe dadurch gelöst, dass die Isolierkörper als längliche Platten ausgebildet sind, bei denen in einer Längsschmalseite wenigstens eine Nut und an der anderen Längsschmalseite wenigstens ein Verbindungsansatz vorgesehen ist, wobei die Nut und der Verbindungsansatz formgleich ineinanderpassende Querschnitte aufweisen und zum Anschluss der Platten unter verschiedenen Winkeln ihrer Längsmittelebenen zueinander die Querschnitte von Nut und Verbindungsansatz kreisbogenförmig begrenzt sind, wobei die Bogenlänge des Querschnittes der Nut grösser als ein Halbkreisbogen ist und die Bogenlänge des Querschnittes des Verbindungsansatzes noch grösser als jene des Querschnittes der Nut ist, wobei vorzugsweise die Platten wenigstens an ihrer dem Speicher abgewandten Seite mit einer Deckschicht, z.B. aus Aluminium, versehen sind. Eine solche Ausbildung ist an die Krümmung des Speichermantels leicht anpassbar, da die einzelnen Formsegmente im Bereich ihrer Verbindung zueinander bewegbar sind. Weiters ist durch das formgleiche Ineinanderpassen der Verbindungsmittel ein sicherer Halt zwischen den einzelnen Formsegmenten gegeben. Ferner ist durch die Ausbildung des Verbindungsansatzes und der Nut ein besonders leichtes Verschwenken der einzelnen Formsegmente zueinander ermöglicht, wobei durch die Anbringung der Deckschicht an der dem Behälter abgewandten Seite der Platten eine Erhöhung der Isolierwirkung erreicht wird, da einerseits ein Abschirmeffekt auftritt und anderseits bei im Freien aufgestellten Behältern das Eindringen von Feuchtigkeit verhindert wird.

Aus der DE-A-2 349 601 ist es an sich bekannt, Platten mittels einer Nut und einem Verbindungsansatz zu verbinden, wobei die Nut und der Verbindungsansatz formgleich ineinanderpassenden Querschnitt aufweisen. Dabei handelt es sich jedoch um die starre Verbindung von Schalungskörpern, wobei die Bogenlängen der Querschnitte gleich sind, so dass kein gegenseitiges Verschwenken der Platten möglich ist.

Vorteilhafterweise können die Platten im Querschnitt gekrümmt bzw. abgewinkelt verlaufen, wodurch die Zwischenräume zwischen der Speicheraussenwand und der Innenseite der Platten so klein als möglich gehalten sind. Weiters können, insbesondere bei im Freien aufgestellten Speichern, die an der Aussenseite zwischen den Platten auftretenden Fugen mit einer Dichtmasse, z.B. aus Silikonkautschuk, ausgefüllt sein, wodurch das Eindringen von Feuchtigkeit und etwaigen Luftströmungen zwischen Behälter und Isolierung verhindert wird, was eine erhebliche Verbesserung der Isolierwirkung ergibt. Schliesslich können zwischen der Aussenseite des Speichers und der Innenseite der Platten gegebenenfalls vorhandene Zwischenräume mit einem Schaumstoff, z.B. Einkomponentenschaumstoff, ausgefüllt sein, wodurch eine Luftzirkulation zwischen Behälteraussenseite und Innenseite der Isolierung verhindert ist, wodurch gleichfalls die Isolierwirkung erhöht wird.

In der Zeichnung sind zwei Ausführungsbeispiele des Erfindungsgegenstandes dargestellt.

Fig. 1 zeigt einen Horizontalschnitt durch das erste Ausführungsbeispiel bei um einen Speicher mit kleinem Krümmungsradius herumgelegter Isolierung.

Fig. 2 gibt in gleichem Schnitt das zweite Ausführungsbeispiel bei um einen Speicher mit grossem Krümmungsradius herumgelegter Isolierung wieder.

Fig. 3 veranschaulicht im Detail die Verbindung der einzelnen Formsegmente der Isolierung gemäss Fig. 2.

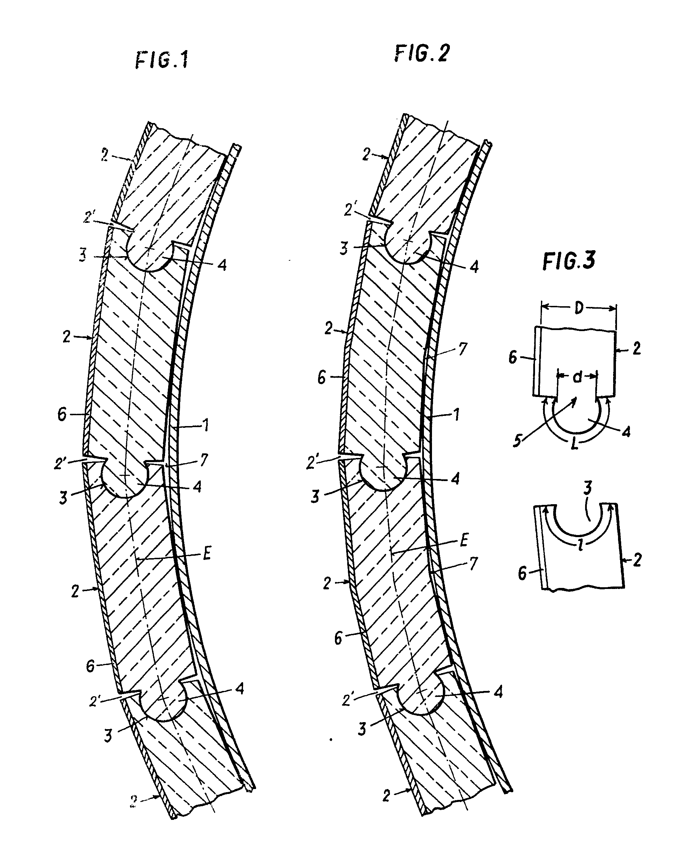

Mit 1 ist die Speicherwand bezeichnet, an deren Aussenseite als Platten 2 ausgebildete Isolierkörper angelegt sind. Jede Platte 2 weist in der einen Längsschmalseite eine Nut 3 und an der gegenüberliegenden Längsschmalseite einen Verbindungsansatz 4 auf (s. Fig. 3), wobei der Verbindungsansatz 4 und die Nut 3 formgleich ineinanderpassen. Im Grundriss weisen die beiden Teile kreisbogenförmiges Profil auf, wobei die Bogenlänge 1 der Nut 3 grösser als ein Halbkreisbogen, und die Bogenlänge L des Verbindungsansatzes 4 noch grösser als jene des Querschnittes der Nut 3 ist.

Der Verbindungsansatz 4 ist über einen Verbindungsabschnitt 5 mit der Platte 2 verbunden, wobei die Dicke d des Verbindungsabschnittes 5 mindestens die Hälfte der Dicke D der Platte 2 beträgt (s. Fig. 3). Im Querschnitt verlaufen die Platten beim Ausführungsbeispiel nach Fig. 1 gekrümmt und beim Ausführungsbeispiel nach Fig. 2 und 3 abgewinkelt, wobei mit E die Längsmittelebenen der Platten 2 bezeichnet sind.

An der dem Speicher 1 abgewandten Seite weisen die Platten 2 eine wetterfeste Deckschicht 6, z.B. eine Aluminiumdeckschicht, auf.

Zum Anbringen der Isolierung wird der Verbindungsansatz 4 der Platte 2 in die Nut 3 der benachbarten Platte in deren Längsrichtung eingeschoben, und die zusammenhängenden Platten 2 werden um den Speicher 1 herumgelegt, wonach die Isolierung bereits fertig ist.

Die Aluminiumdeckschicht kann zusätzlich auch an der dem Speicher zugewandten Seite vorgesehen sein, wodurch ein Eindringen von etwaigem Schwitzwasser od. dgl. in den Isolierkörper verhindert wird. Es kann sich dabei die Deckschicht auch über die gesamte Aussenfläche jedes Isolierkörpers erstrecken.

Die an der Aussenseite der Platten 2 zwischen ihnen gebildeten Fugen 2' können, insbesondere bei im Freien aufgestellten Speichern 1, mit einer Dichtmasse, z.B. aus Silikonkautschuk, ausgefüllt werden.

Der zwischen der Innenseite der Platte 2 und der Aussenseite des Speichers 1 gegebenenfalls vorhandene Zwischenraum 7 kann zweckmässig mit einem Schaumstoff, z.B. auf Einkomponentenbasis, ausgefüllt werden.

## Patentansprüche

1. Isolierung für Speicher, insbesondere für Grossspeicher, bei welcher vorgeformte Isolierkörper um den Speicher an diesem anliegend herumgelegt und miteinander verbunden sind, dadurch gekennzeichnet, dass die Isolierkörper als längliche Platten (2) ausgebildet sind, bei denen in einer Längsschmalseite wenigstens eine Nut (3) und an der anderen Längsschmalseite wenigstens ein Verbindungsansatz (4) vorgesehen ist, wobei die Nut (3) und der Verbindungsansatz (4) formgleich ineinanderpassende Querschnitte aufweisen und zum Anschluss der Platten unter verschiedenen Winkeln ihrer Längsmittelebenen (E) zueinander die Querschnitte von Nut (3) und Verbindungsansatz (4) kreisbogenförmig begrenzt sind, wobei die Bogenlänge (1) des Querschnittes der Nut (3) grösser als ein Halbkreisbogen ist und die Bogenlänge (L) des Querschnittes des Verbindungsansatzes (4) noch grösser als jene des Querschnittes der Nut (3) ist, wobei vorzugsweise die Platten (2) wenigstens an ihrer dem Speicher (1) abgewandten Seite mit einer Deckschicht (6), z.B. aus Aluminium, versehen sind.

2. Isolierung nach Anspruch 1, dadurch gekennzeichnet, dass die Platte (2) im Querschnitt gekrümmt bzw. abgewinkelt verläuft.

3. Isolierung nach Anspruch 1 oder 2, dadurch gekennzeichnet, dass insbesondere bei im Freien aufgestellten Speichern (1), die an der Aussenseite zwischen den Platten (2) auftretenden Fugen (2') mit einer Dichtmasse, z.B. aus Silikonkautschuk, ausgefüllt sind.

4. Isolierung nach einem der Ansprüche 1 bis 3, dadurch gekennzeichnet, dass zwischen der Aussenseite des Speichers (1) und der Innenseite der Platten gegebenenfalls vorhandene Zwischenräume (7) mit einem Schaumstoff, z.B. Einkomponentenschaumstoff, ausgefüllt sind.

## Revendications

1. Dispositif d'isolation pour réservoir, notamment pour réservoir de grandes dimensions dans lequel des corps isolants préformés sont placés tout autour du réservoir de façon contiguë et sont reliés les uns aux autres, caractérisé en ce que les corps isolants sont formés par des plaques (2) longitudinales dans lesquelles au moins une rainure (3) est prévue dans un côté étroit longitudinal et au moins une saillie de liaison (4) est prévue sur l'autre côté étroit longitudinal, en ce que la rainure (3) et la saillie de liaison (4) présentent des sections transversales de même forme s'emboîtant et en ce que les sections transversales de la rainure (3) et de la saillie de liaison (4) ont un profil en arc de cercle en vue du raccordement des plaques les unes aux autres sous des angles différents par rapport à leur plan médian longitudinal (E), la longueur d'arc (1) de la section transversale de la rainure (3) étant supérieure à celle d'un demi-cercle et la longueur d'arc (L) de la section transversale de la saillie de liaison (4) étant encore plus grande que celle de chacune des rainures (3), les plaques (2) étant de préférence munies sur leur côté opposé au réservoir (1) d'une couche de protection (6), par exemple en aluminium.

2. Dispositif d'isolation selon la revendication 1, caractérisé en ce que la plaque (2) a en section transversale une forme courbée ou coudée.

3. Dispositif d'isolation selon l'une des revendications 1 ou 2, caractérisé en ce que, notamment dans les réservoirs (1) montés en plein air, les joints (2') s'établissant sur le côté extérieur entre les plaques (2) sont remplis d'une masse d'étanchéité, par exemple du caoutchouc silicone.

4. Dispositif d'isolation selon l'une des revendications 1 à 3, caractérisé en ce que les espaces intermédiaires (7) éventuellement présents entre le côté extérieur du réservoir (1) et le côté intérieur (7) des plaques est rempli de produit alvéolaire par exemple un produit alvéolaire à un composant.

## Claims

1. Reservoir insulation, particularly for large reservoirs, in which preformed insulating bodies are placed around the reservoir in contact therewith and connected together, characterised in that the insulating bodies are constructed as elongate plates (2) in which at least one groove (3) is provided in one narrow side and at least one connecting projection (4) is provided in the other narrow side, the groove (3) and the connecting projection (4) having cross-sections of the same shape fitting within one another and the cross-sections of the groove (3) and the connecting projection (4) terminating in an arc for connecting the plates together at different angles to their central longitudinal planes (E), whereby the arc length (1) of the cross-section of the groove (3) is greater than a semi-circle and the arc length (L) of the cross-section of the connecting projection (4) is even greater than that of the cross-section of the groove (3), the plates (2) being preferably provided with a covering layer (6), e.g. of aluminium, at least on the side directed away from the reservoir (1).

2. Insulation as claimed in Claim 1, characterised in that the plate (2) is curved or angled in cross-section.

3. Insulation as claimed in Claim 1 or 2, characterised in that particularly in the case of reservoirs (1) situated in the open air the joints (2') occurring between the plates (2) on the outer surface are filled with a sealing composition, e.g. of silicon rubber.

4. Insulation as claimed in one of Claims 1 to 3, characterised in that spaces (7) which are optionally present between the outer surface of the reservoir (1) and the inner surface of the plates are filled with a foam material, e.g. a single component foam material.

1/1

FIG.1  FIG.2

FIG.3